# EUROPEAN PATENT SPECIFICATION

(11) **EP 0 779 163 B1**
(45) Date of publication and mention of the grant of the patent: **23.05.2001**
(21) Application number: 96308963.6
(22) Date of filing: 10.12.1996
(51) Int. Cl.: B60C 9/20

(54) **Motorcycle tyre**
Motorradluftreifen
Bandage pneumatique pour moto

(30) Priority: 12.12.1995 JP 32301695
(43) Date of publication of application: 18.06.1997
(73) Proprietor: SUMITOMO RUBBER INDUSTRIES LIMITED, Kobe-shi, Hyogo-ken (JP)
(72) Inventor: Suzuki, Shigehiko, Kobe-shi, Hyogo-ken (JP)
(74) Representative: Stewart, Charles Geoffrey

(56) References cited:
- EP-A- 0 173 080
- GB-A- 2 002 699
- LU-A- 77 915
- US-A- 3 118 483

## Description

The present invention relates to a motorcycle tyre having a belt structure which can be formed with simple apparatus without decreasing tyre performance.

Recently, as the running speed increases, tyres for large-sized motorcycles are required to be improved in strength and rigidity. Therefore, the number of the carcass plies and the number of the belt plies have been increased.

On the other hand, in the tyre technical fields for other than motorcycle tyres such as four wheel vehicles, a belt composed of three or more plies is usually employed, and it is general knowledge that the ply widths may be gradually decreased from the radially inner ply to the radially outer ply.

Therefore, in motorcycle tyres, especially for large-sized motorcycles, as shown in Fig. 5, corresponding to the preamble of claim 1, the belts have been formed in the same way such that the ply widths satisfy b1>b2>b3. Such a belt is formed by winding strips having different widths. Accordingly, the tyre building apparatus which is used to wind the strips must be equipped with the same number of strip supplying units as the number of belt plies. For example, three strip supplying units are necessary to make a belt composed of three different width plies. As a result, the tyre building apparatus becomes complicated and the plant investment increases. Incidentally, if the belt cord thickness and the belt ply thickness are increased ir order to avoid increasing the belt ply number, the rigidity of the tread portion becomes excessively high and ride comfort is deteriorated.

It is therefore, an object of the present invention to provide a motorcycle tyre having a belt structure which can maintain or improve the running performances of the tyre, without increasing the number of belt strip supplying units needed so it is possible to simplify the tyre building work and decrease the tyre manufacturing cost.

According to the present invention, a motorcycle tyre comprises a tread portion of which the tread surface is curved convexly so that the maximum cross-sectional width of the tyre lies between axial edges of the tread portion, a carcass extending between bead portions through the tread portion and sidewall portions and turned up around a bead core in each bead portion, a belt disposed radially outside the carcass and inside the tread portion, the belt comprising three cut-edge plies; a radially inner ply, a radially outer ply and a middle ply therebetween, wherein the radially inner ply and radially outer ply are made of the same strip of rubberised parallel cords having a strip width of from 85 to 105 % the tread width, and the middle ply is made of a strip of rubberised cords having a strip width which is different from that of the inner and outer plies.

Preferably, the difference between the strip width of the middle ply and the strip width of the inner and outer plies is 10 to 40 mm.

Embodiments of the present invention will now be described in detail in conjunction with the accompanying drawings, in which:
Fig.1 is a cross sectional view of a motorcycle tyre showing an embodiment of the present invention;
Fig.2 is a developed plan view of the belt thereof;
Fig.3 is a cross sectional view showing another embodiment of the present invention;
Fig.4 is a schematic perspective view showing tyre building apparatus; and
Fig.5 is a cross sectional view showing a belt according to a prior art.

In the figures, the motorcycle tyre 1 comprises a tread portion 2 of which the tread surface 2A is curved convexly so that the maximum section width of the tyre lies between the tread edges, a pair of bead portions 4 each of which is provided with a bead core 5 therein, a carcass 6 extending between the bead portions 4 and turned up around the bead core 5 in each bead portion, a belt 7 disposed radially outside the carcass 6 and inside the tread portion 2, and a tapered hard rubber bead apex 8 disposed radially outside the bead core 5 in each bead portion.

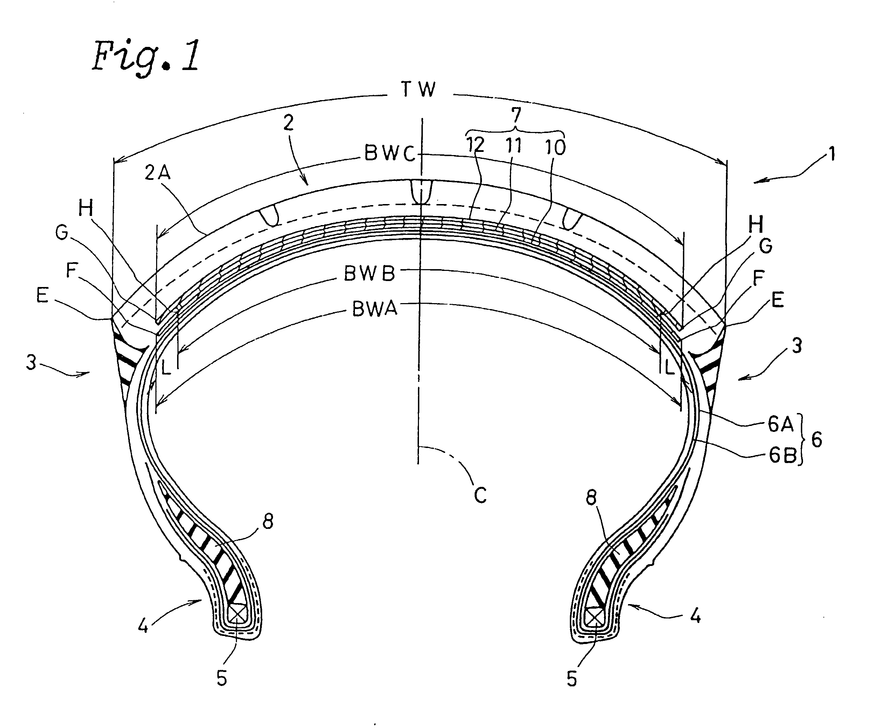

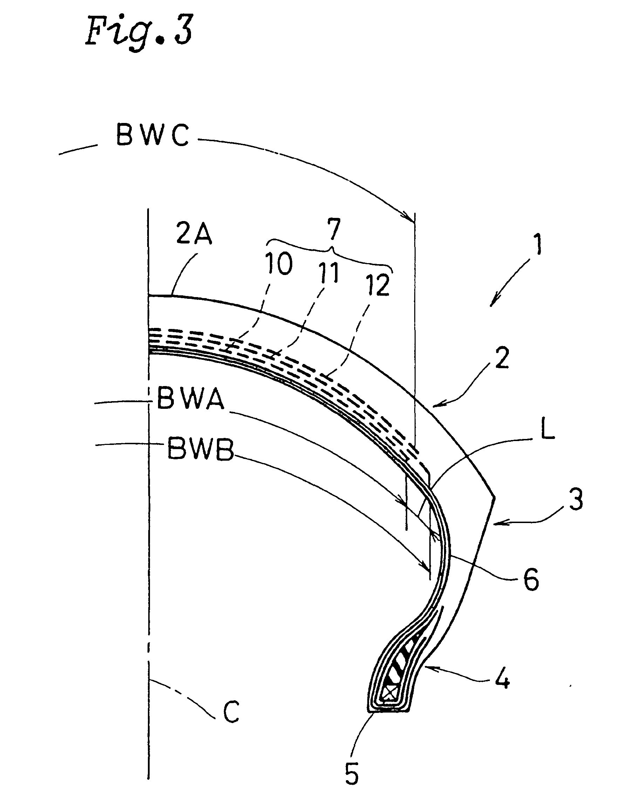

The carcass 6 comprises at least one ply, in the embodiments of Figs.1 and 3 two plies 6A and 6B, of carcass cords arranged radially at an angle of from 70 to 90 degrees with respect to the tyre equator C. For the carcass cords, organic fibre cords, e.g. nylon, polyester, rayon, aromatic polyamide and the like, are used. When a plurality of plies are used, the carcass cords in each ply are inclined to cross the cords of the adjacent ply.

The belt 7 comprises at least three plies, in the embodiments of Figs. 1 and 3 only three plies, of parallel cords 13 laid at an inclination angle of 0 to 30 degrees with respect to the tyre equator C. Each belt ply is a so called cut-edge ply of which the axial edges are not folded, and extends continuously from one of the axial edges to the other. For the belt cords 13, organic fibre cords, e.g. nylon, rayon, polyester, aromatic polyamide and the like and steel cords can be used. Especially aromatic polyamide fibre cords are preferably used.

The radially inner ply 10 and the radially outer ply 12 are formed by winding the same strip of rubberised parallel cords. Accordingly, the plies 10 and 12 have the same strip width, and thus, the arc length BWA of the radially inner ply 10 measured axially along the thickness centre line thereof is the same as the arc length BWC of the radially outer ply 12 measured axially along the thickness centre line thereof, and the axial edges F and G of the inner ply 10 and outer ply 12 are substantially aligned with each other in the axial direction.

The arc lencth BWA, BWC or strip width of the inner and outer plies is set in the range of from 85 to 105 % of the tread width TW, which is measured axially along the tread face 2A from one tread edge E to the other. Thus, with respect to the ply thickness, belt cord material and structure, cord count, cord inclination angle and direction, the inner ply 10 and outer ply 12 are the same.

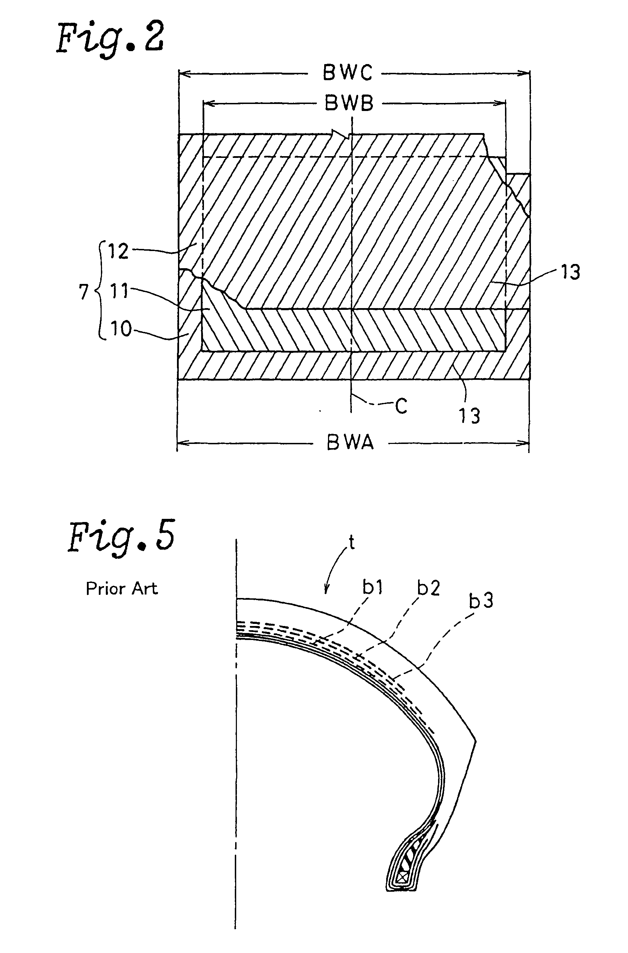

On the other hand, the middle ply 11 is formed by winding a strip of rubberised parallel cords of which the strip width BWB is different from that of the inner and outer plies 10 and 12. In Figs.1 and 2, the strip width BWB is smaller than the strip width BWA, BWC. However, as shown in Fig.3, it is also possible to set the strip width BWB larger than the strip width BWA, BWC. In any case, the distance L between the edges H and (F or G) of the middle ply 11 and the belt ply (10 or 12) measured along the curvature is in the range of from 5 to 20 mm. If the distance L is less than 5 mm, as the edges F, H, G approach each other, and the rigidity of the tread portion 2 change greatly at this part, the steering stability during cornering decreases and also the durability of the tread portion decreases. If the distance L is more than 20 mm, a high rigidity part and a low rigidity part in the shoulder region of the tread 2 become wide and the cornering and straight running performances decrease.

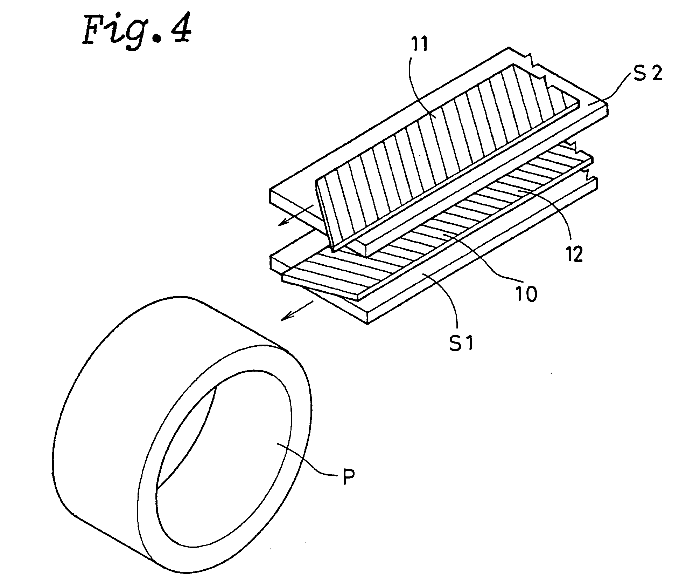

Fig.4 schematically shows a tyre building apparatus, which comprises a shaping drum P or a shaped carcass around which belt plies are wound, and a first and second supply unit S1 and S2 used to convey a belt cord strip which is wound as the belt ply. Since the inner ply 10 and the outer ply 12 are the same, these plies can be made of strip supplied by the single unit S1, whereas the middle ply 11 is made of a different strip supplied by the other unit S2. Thus, only two units are necessitated to make the three ply belt. Accordingly, as the number of the strip supply units is decreased, the plant investment can be greatly decreased. Further, it becomes possible to utilise existing equipment which is originally used to make a two ply belt. Thus, it is possible to reduce the tyre manufacturing cost.

The belt cords 13 in the inner ply 10 are inclined in the same direction as the belt cords 13 in the outer ply 12, but the belt cords in the middle ply 11 are inclined in the reverse direction thereto. Therefore, the cords in each ply cross the cords in the adjacent ply and the belt fully displays its hoop effect to increase the rigidity of the tread portion 2.

### COMPARISON TEST

Test tyres of size 150/80V16 were made by way of test and tested for high speed stability, steering stability, high speed durability, and drum durability. The specifications and test results are shown in Table 1.
1) High speed stability and Steering stability test
A 1200cc motorcycle provided on the rear wheel with the test tyre was run on a dry surfaced road and the performances were evaluated by the driver's feeling. The results are indicated by an index based on that the reference tyre is 100. the larger the value, the better the performance.
2) High speed durability test
This test was conducted in a test course, using the same machine as above. The running speed was increased every 10 minutes at a step of 10 km/h from 200 km/h, and the speed at which the tyre failed was measured as the high speed durability.

| Rear Test tyre | |
|---|---|
| Tyre size | 150/80V16 |
| Rim | MT3.50X16 |
| Pressure | 2.9 kg/cm² |

| Front | |
|---|---|
| Tyre size | 120/80V16 |
| Rim | MT2.75X16 |
| Pressure | 2.5 kg/cm² |
| Carcass cord material | nylon |
| Carcass cord angle | 28 deg. to tyre equator |
| Number of carcass ply | 2 |
| Number of belt ply | 2 |
| Belt cord material | nylon |
| Belt cord angle | 26 deg. to tyre equator |

3) Drum durability test

Using a drum tester, the test tyre was run at a speed of 65 km/h under a load of 383 kgf to be failure, and the total running distance was measured as the drum durability.

Through the tests, it was confirmed that the performances of the example tyres were maintained at the same level as the reference tyres irrespective of the carcass structure (radial or bias), without increasing the number of strip supply units in a tyre building apparatus. In the present invention, therefore, it becomes possible to decrease the tyre manufacturing cost, and the tyre building apparatus can be widely used for various tyres.

In the present invention, the following modifications are also possible: the belt further comprises one or more plies, for example a breaker ply made of a strip of inclined parallel cords, a band ply made of one or more cords laid at substantially zero degree to the tyre circumferential direction disposed radially outside the plies 10-12 (e.g. at least one spirally wound cord, and parallel cords in a form of strip) and the like; and the carcass 6 comprises one or more bias plies to be a bias tyre than a radial tyre.

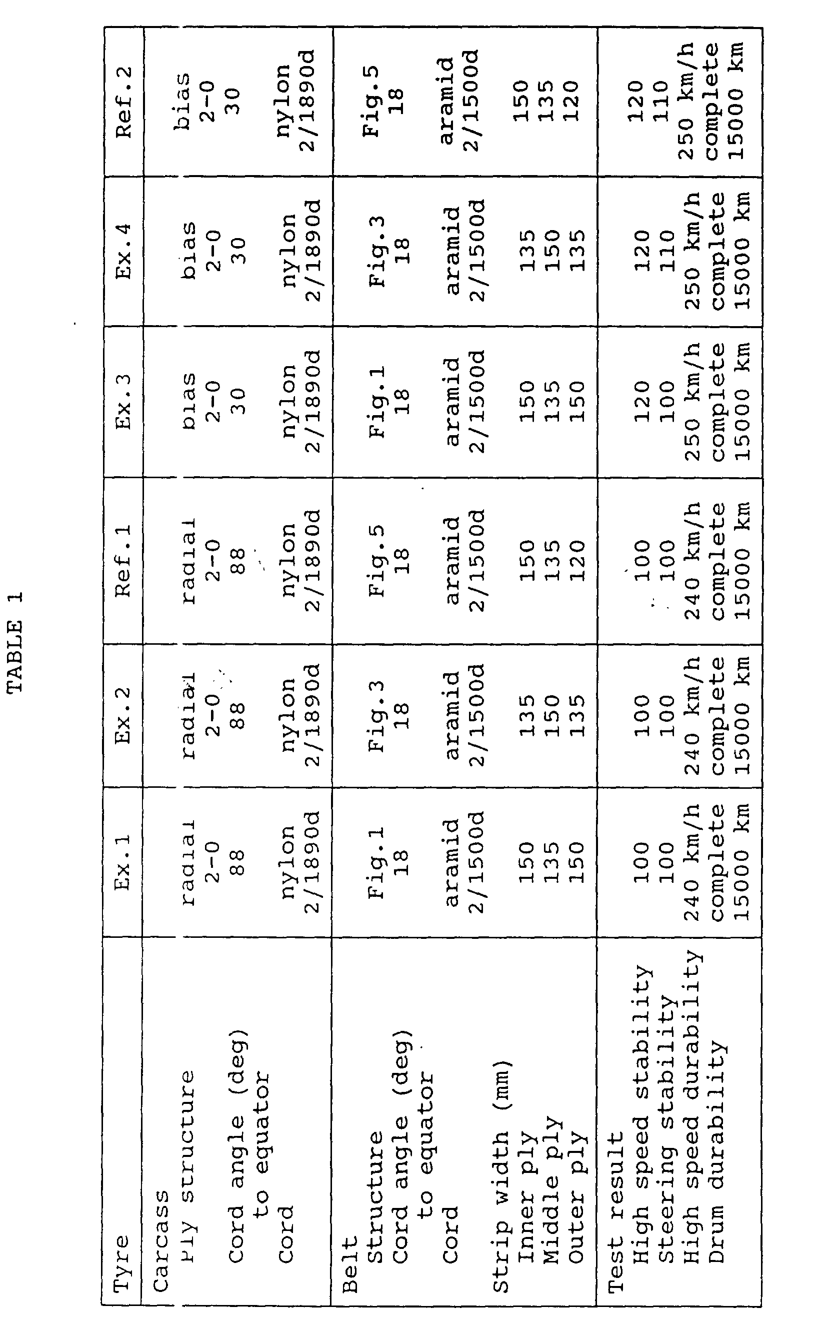

## Claims

1. A motorcycle tyre comprising a tread portion (2) of which the tread surface (2A) is curved convexly so that the maximum cross-section width of the tyre lies between axial edges (E) of the tread portion (2), a carcass (6) extending between bead portions (4) through the tread portion and sidewall portions and turned up around a bead core (5) in each bead portion, a belt (7) disposed radially outside the carcass (6) and inside the tread portions; the belt (7) comprising three cut-edge plies (10,11,12); a radially inner ply (10), a radially outer ply (12) and a middle ply (11) therebetween, characterised in that the radially inner ply (10) and radially outer ply (12) being made of the same strip of rubberised parallel cords having a strip width (BWA,BWC) of from 85 to 105 % the tread width (TW), and the middle ply (11) is made of a scrip of rubberised cords having a strip width (BWB) which is different from that of the inner and outer plies.

2. A motorcycle tyre according to claim 1, characterised in that the difference between the strip width (BWB) of the middle ply (11) and the strip width (BWA,BWC) of the inner and outer plies is 10 to 40 mm.

3. A motorcycle tyre according to claim 1 or 2, characterised in that the middle ply (11) is wider than the inner and outer plies (10,12).

4. A motorcycle tyre according to claim 1 or 2, characterised in that the middle ply (11) is narrower than the inner and outer plies (10,12).

5. A motorcycle tyre according to any of claims 1 to 4, characterised in that the belt consists of said three cut-edge plies (10,11,12) and the carcass (6) consists of two plies (6A,6B).

## Patentansprüche

1. Motorradreifen, umfassend einen Laufstreifenabschnitt (2), dessen Laufstreifenoberfläche (2A) konvex gekrümmt ist, so daß die maximale Querschnittsbreite des Reifens zwischen axialen Rändern (E) des Laufstreifenabschnitts (2) liegt, eine Karkasse (6), die sich zwischen Wulstabschnitten (4) durch den Laufstreifenabschnitt und Seitenwandabschnitte hindurch erstreckt und um einen Wulstkern (5) in jedem Wulstabschnitt umgeschlagen ist, einen Gürtel (7), der radial außerhalb der Karkasse (6) und innerhalb des Laufstreifenabschnitts angeordnet ist, wobei der Gürtel (7) drei Schnittkantenlagen (10, 11, 12) umfaßt, und zwar eine radial innere Lage (10), eine radial äußere Lage (12) und eine mittlere Lage (11) dazwischen, dadurch gekennzeichnet, daß die radial innere Lage (10) und die radial äußere Lage (12) aus dem gleichen Streifen aus gummierten parallelen Korden hergestellt sind, der eine Streifenbreite (BWA, BWC) zwischen 85 und 105% der Laufstreifenbreite (TW) aufweist, und die mittlere Lage (11) aus einem Streifen aus gummierten Korden hergestellt ist, der eine Streifenbreite (BWB) aufweist, die sich von derjenigen der inneren und äußeren Lagen unterscheidet.

2. Motorradreifen nach Anspruch 1, dadurch gekennzeichnet, daß die Differenz zwischen der Streifenbreite (BWB) der mittleren Lage (11) und der Streifenbreite (BWA, BWC) der inneren und äußeren Lagen 10 bis 40 mm beträgt.

3. Motorradreifen nach Anspruch 1 oder 2, dadurch gekennzeichnet, daß die mittlere Lage (11) breiter als die inneren und äußeren Lagen (10, 12) ist.

4. Motorradreifen nach Anspruch 1 oder 2, dadurch gekennzeichnet, daß die mittlere Lage (11) schmaler als die inneren und äußeren Lagen (10, 12) ist.

5. Motorradreifen nach einem der Ansprüche 1 bis 4, dadurch gekennzeichnet, daß der Gürtel aus den drei Schnittkantenlagen (10, 11, 12) besteht, und daß die Karkasse (6) aus zwei Lagen (6A, 6B) besteht.

## Revendications

1. Pneumatique de motocyclette comprenant une partie (2) de bande de roulement dont la surface (2A) de bande de roulement est courbée de façon convexe afin que la largeur maximale en coupe du pneumatique se trouve entre les bords axiaux (E) de la partie (2) de bande de roulement, une carcasse (6) qui s'étend entre les parties de talon (4) par l'intermédiaire de la partie de bande de roulement et des parties de parois latérales et repliée autour d'une tringle (5) dans chaque partie de talon, et une ceinture (7) disposée radialement à l'extérieur de la carcasse (6) et à l'intérieur de la partie de bande de roulement, la ceinture (7) comprenant trois nappes à bord coupé (10, 11, 12), une nappe radialement interne (10), une nappe radialement externe (12) et une nappe médiane (11) placée entre elles, caractérisé en ce que la nappe radialement interne (10) et la nappe radialement externe (12) sont formées de la même bande de câbles parallèles caoutchoutés ayant une largeur de bande (BWA, BWC) comprise entre 85 et 105 % de la largeur (TW) de la bande de roulement, et la nappe médiane (11) est formée d'une bande de câbles caoutchoutés ayant une largeur de bande (BWB) qui est différente de celle des nappes interne et externe.

2. Pneumatique de motocyclette selon la revendication 1, caractérisé en ce que la différence entre la largeur de bande (BWB) de la nappe médiane (11) et la largeur de bande (BWA, BWC) des nappes interne et externe est comprise entre 10 et 40 mm.

3. Pneumatique de motocyclette selon la revendication 1 ou 2, caractérisé en ce que la nappe médiane (11) est plus large que les nappes interne et externe (10, 12).

4. Pneumatique de motocyclette selon la revendication 1 ou 2, caractérisé en ce que la nappe médiane (11) est plus étroite que les nappes interne et externe (10, 12).

5. Pneumatique de motocyclette selon l'une quelconque des revendications 1 à 4, caractérisé en ce que la ceinture est constituée des trois nappes à bord coupé (10, 11, 12) et la carcasse (6) comprend deux nappes (6A, 6B).
